Europäisches Patentamt

European Patent Office

Office européen des brevets

(11) Publication number: **0 117 753**
**B1**

(12) **EUROPEAN PATENT SPECIFICATION**

(45) Date of publication of patent specification: **25.07.90**

(21) Application number: **84301270.9**

(22) Date of filing: **27.02.84**

(51) Int. Cl.⁵: **G 11 B 5/58,** G 11 B 5/09 //
G11B15/46

(54) **Methods of and apparatus for recording digital information signals.**

(30) Priority: **28.02.83 JP 31962/83**

(43) Date of publication of application:
**05.09.84 Bulletin 84/36**

(45) Publication of the grant of the patent:
**25.07.90 Bulletin 90/30**

(84) Designated Contracting States:
**AT DE FR GB NL**

(56) References cited:
**EP-A- 246 705**        **GB-A-2 097 968**
**DE-A-3 046 370**      **US-A-3 829 892**
**FR-A-2 416 523**       **US-A-3 919 697**
**GB-A-2 029 607**      **US-A-4 141 048**
**GB-A-2 068 599**

**PATENTS ABSTRACTS OF JAPAN, vol. 6, no. 30
(P-103)908r, 23rd February 1982; & JP-A-56 148
723 (NIPPON VICTOR K.K.) 18-11-1981
NEUES AUS DER TECHNIK, no. 6, 15th
December 1978, pages 1,2, Vogel-Verlag,
Würzburg, DE; "Spurfolgesystem"**

(73) Proprietor: **SONY CORPORATION
7-35 Kitashinagawa 6-Chome Shinagawa-ku
Tokyo 141 (JP)**

(72) Inventor: **Omori, Takashi c/o Patent Division
Sony Corporation 7-35 Kitashinagawa-6
Shinagawa-ku Tokyo (JP)**
Inventor: **Sugiki, Hiraku c/o Patent Division
Sony Corporation 7-35 Kitashinagawa-6
Shinagawa-ku Tokyo (JP)**

(74) Representative: **Thomas, Christopher Hugo
et al
D Young & Co 10 Staple Inn
London WC1V 7RD (GB)**

Courier Press, Leamington Spa, England.

## Description

This invention relates to methods of an apparatus for recording digital information signals and, more particularly, relates to recording a digital information signal and a pilot signal using a rotary head and employing the pilot signal to control the tracking of the head during playback.

It is well known to pulse code modulate a video signal and/or an audio signal for recording on a magnetic tape as a series of parallel, slanted or skew tracks using a rotary head assembly of the helical scan kind. Subsequently, during reproduction of the recorded signal, the pulse code modulated (PCM) signals are appropriately demodulated back to the original analog form. The principal reason for such pulse code modulation of the video signal and the audio signal is that in that form the signals can be recorded and reproduced with much higher quality than the original analog signals.

In a video tape recorder the conventional tracking control system enables the rotary head correctly to trace the appropriate track upon playback, and employs a control signal recorded along the length of the tape. This control signal is recorded and reproduced using a fixed stationary head, not the rotary head. Using the reproduced control signal from the longitudinal track, the rotational phase of the rotary head is maintained in a constant phase relationship. The fixed magnetic head that is required for this kind of tracking control, however, tends to prevent the recording and reproducing apparatus from being of compact size, because the fixed head requires its own mounting space and associated mounting hardware, all of which must be located inside the compact apparatus and arranged adjacent to the tape guide drum.

Therefore, various approaches have been proposed to provide tracking control without requiring a separte fixed head. In one such previously proposed approach, an analog video signal is recorded and/or reproduced in a so-called superimposed condition, with no guard bands being formed between the adjacent tracks. In the superimposed condition, each rotary head has a different azimuth angle and each head is slightly wider than the resultant recorded track. This is accomplished during recording by having the edge portion of each successive track laid down by the respective head overlap the adjacent edge portion of the next preceding track. Each track then both overlaps the edge of the preceding track and has its opposite edge overlapped as well by the next successive track thereby leading to the description superimposed condition. The edge portions of the two adjacent tracks that will be traced by a wide head during playback will not present a reproduction problem because these adjacent tracks were recorded by a head having a different azimuth gap angle compared with that of the track being reproduced, and those signals will not be reproduced with a level that could degrade the desired signal. In this superimposed tracking control approach, four different kinds (frequencies) of tracking pilot signals are recorded by the rotary heads on the tracks in which the video signal is recorded in the superimposed condition. The pilot signals are selected to have a low frequency relative to the video signal being recorded, and are in a region outside the frequency spectrum of the video signals being recorded, so that upon playback they can be easily separated one from another.

Nevertheless, the low frequency feature of this tracking control method becomes its major drawback, because signals having relatively low frequencies, such as these pilot signals, are diffpcult to erase. Accordingly, when the pilot signal is erased in making a new recording following use of this superimposed condition, a portion of the previously recorded pilot signal remains unerased. Furthermore, depending upon the modulation system employed, when the information signal to be recorded has a frequency spectrum in the low-frequency band region, such as the PCM signal would have, it becomes extremely difficult to separate the pilot signals from the signals of interest. Moreover, since this tracking control method employs four kinds of pilot signals, that is, signals having four different frequencies, the attendant circuitry becomes complex and expensive.

Another approach to providing tracking control in a rotary head video tape recorder is disclosed in our U.S. patent 4,141,048, in which the pilot signal is recorded in the horizontal blanking period of the video signal. Nevertheless, since the pilot signal is in the same frequency band region as the video signal, it is once again difficult to reproduce the pilot signal accurately when reproducing the recorded video signal.

UK patent specification GB—A—2 097 968 discloses a method of recording digital information signals in accordance with the precharacterizing part of claim 1. Our European patent specification EP—A1—0 246 705 (epC Article 54(3)) discloses a track pattern generally similar to that of this invention, but recorded in each track.

According to the present invention there is provided a method of recording digital signals on a magnetic record medium using a rotary head that periodically traces the magnetic record medium, the method comprising the step of:

recording a digital information signal in a respective first predetermined area in each of a plurality of slanted tracks formed on said magnetic medium by said rotary head, said slanted tracks being formed by said rotary head with no guard bands between adjacent said slanted tracks;

determing a respective second predetermined area in each said slanted track adjacent to one end of the respective said slanted track, and different from the respective said predetermined area; and

recording a tracking pilot signal in said second predetermined area, for tracking control during playback;

the method being characterized by:

said tracking pilot signal being recorded in every other one only of said slanted tracks in correspondingly-positioned predetermined portions of said second predetermined areas, said predetermined portions being spaced from said end of the respective said slanted track in the longitudinal direction thereof; and

applying an erase signal using said rotary head over the whole extent of every said second predetermined area except for said second portions, for erasing signals previously recorded in said second predetermined areas.

According to the present invention there is also provided apparatus for recording digital signals in a plurality of slanted tracks on a magnetic record medium by a rotary head that periodically traces said magnetic record medium, the paaratus comprising:

means for recording a digital information signal in a respective first predetermined area in each of said plurality of slanted tracks on said magnetic medium by said rotary head, said slanted tracks being formed by said rotary head with no guard bands between adjacent said slanted tracks;

means for determing a respective second predetermined area in each said slanted track adjacent to one end of the respective said slanted track, and different from the respective said first predetermined area; and

means for recording a tracking pilot signal in said second predetermined area for tracking control during playback;

characterized by:

said tracking pilot signal being recorded in every other one only of said slanted tracks in correspondingly-positioned predetermined portions of said second predetermined areas, said predetermined portions being spaced from said end of the respective said slanted track in the longitudinal direction thereof; and

means for applying an erase signal using said rotary head over the whole extent of every said second predetermined area except for said second portions, for erasing signals previously recorded in said second predetermined areas.

The invention will now be described by way of example with reference to the accompanying drawings, throughout which like parts are referred om be like references, and in which:

Figure 1 is a representation of a recorded track pattern formed by a rotary head using a conventional tracking control system;

Figure 2 is a schematic block diagram of a conventional tracking control system for a rotary recording and reproducing apparatus;

Figure 3 is a representation of a rotary head assembly for use with an embodiment of the present invention;

Figure 4 is a representation of a recorded track pattern formed using an embodiment of the present invention;

Figure 5 is a schematic block diagram of a system for recording information signals and tracking control pilot signals and according to the present invention;

Figures 6A to 6E are waveform diagrams for explaining the operation of the circuit of Figure 5;

Figure 7 is a representation of a recorded track pattern formed by an embodiment of the present invention and showing the recorded positions of the tracking control pilot signals therein;

Figure 8 is a schematic block diagram of an embodiment of a reproducing system according to the present invention;

Figures 9A to 9E are waveform diagrams for explaining the operation of the circuit of Figure 8;

Figures 10A to 10E are waveform diagrams for explaining the operation of an embodiment of the present invention in the reproducing mode;

Figure 11 is a schematic block diagram of an embodiment of reproducing system according to the present invention;

Figures 12A to 12F are waveform diagrams for explaining the operation of the circuit of Figure 11;

Figure 13 is a representation of a recorded track pattern formed in accordance with the embodiment of Figure 11;

Figure 14 is a schematic block diagram of an embodiment of reproducing system according to the present invention;

Figures 15A to 15D are waveform diagrams for explaining the operation of the system of Figure 14;

Figures 16A to 16D are waveform diagrams for explaining the operation of the circuit of Figure 11;

Figure 17 is a schematic block diagram of an embodiment of recording system according to the present invention;

Figures 18A to 18E are waveform diagrams for explaining the operation of the system of Figure 17;

Figure 19 is a representation of a recorded track pattern made in accordance with the embodiment of Figure 17;

Figure 20 is a schematic block diagram of another embodiment of reproducing system according to the present invention; and

Figures 21A to 21E are waveform diagrams for explaining the operation of the circuit of Figure 20.

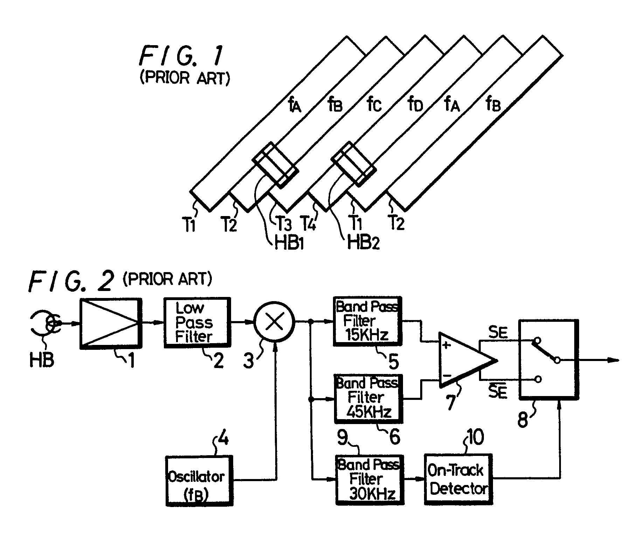

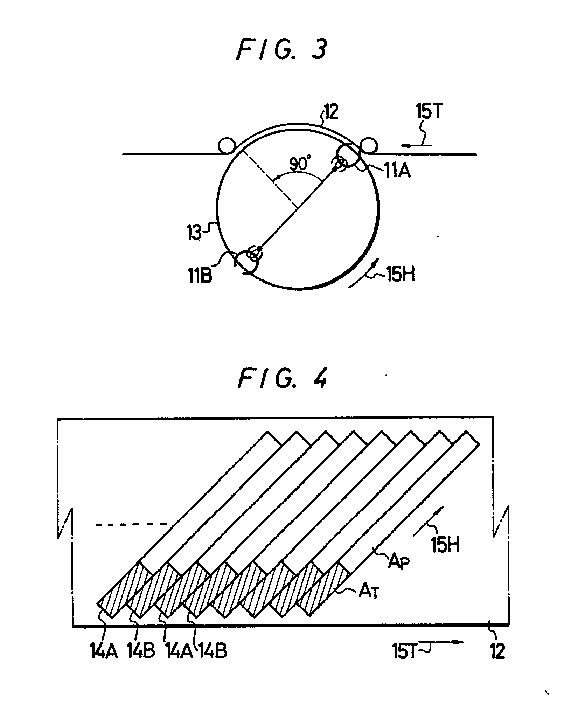

Figures 1 and 2 relate to a conventional tracking control system of the kind for use in the so-called superimposed system involving pilot signals of different frequencies, as discussed above. In this known system, typically two rotary heads are separated by an angular distance of 180°and have different azimuth gap angles, and the four pilot signals employed have mutually different frequencies, for example,

$$f_A=100 \text{ kHz}, f_B=115 \text{ kHz},$$
$$f_C=160 \text{ kHz, and } f_D=145 \text{ kHz}.$$

In Figure 1, one rotary head HA (not shown) records every other track, $T_1$ and $T_3$, sequentially on the record medium, in which a frequency modulated video signal is recorded as the information signal. A pilot signal having the frequency $f_A$ is recorded on the track $T_1$ along with the information signal in the superimposed condition, and a pilot signal of frequency $f_C$ is recorded on the track $T_3$ along with the information signal in the superimposed condition. The other rotary head HB sequentially forms every other track, $T_2$ and $T_4$, which also contain the frequency modulated video signal in the superimposed condition. A pilot signal of frequency $f_B$ is recorded in the track $T_2$, and in the track $T_4$ a pilot signal of a frequency $f_D$ is recorded along with the respective information signals recorded in the superimposed condition.

Upon playback, tracking control is carried out by means of the system shown in Figure 2, however, to simpilfy the explanation only the tracking control appropriate for the rotary head HB is shown. The tracking control for the head HA would be substantially identical to that shown in Figure 2.

Correct tracking or "just" tracking is taken as the situation when the head HB correctly traces the tracks $T_2$ and $T_4$, and in Figure 2 the output signal produced by the head HB is fed through a playback amplifier 1 to a low-pass filter 2, which extracts only the pilot signal of the low-frequency band. This low-frequency band component extracted from the signal detected by the head HB is fed to a multiplying circuit 3, wherein it is multiplied with a signal having a frequency $f_B$ produced by an oscillator 4.

Referring to Figure 1, when the head $HB_1$ traces the track $T_2$, the multiplying circuit 3 produces a signal $E_1$ of frequency
$f_B - f_A = 15$ kHz,
and produces a signal $E_2$ of frequency
$f_C - f_B = 45$ kHz.
Of course, the head $HB_1$ also detects the signal $f_B$, however, when the two inputs to the multiplying circuit 3 are the same, no output signal $(f_B - f_B)$ will be produced. Similarly, when the head $HB_2$ traces the track $T_4$ in Figure 1, the multiplying circuit 3 produces the signal $E_1$ of frequency $f_B - f_A$ and the signal $E_2$ of frequency $f_C = f_B$. Additionally, because $f_D$ is not equal to $f_B$ (unlike in the tracks $T_1$ and $T_3$), a third signal $S_1$ is produced having a frequency $f_D - f_B = 30$ kHz.

The signals $E_1$ and $E_2$ are derived from the reproduction of the pilot signals from the adjacent tracks, that is, the tracks not intended to be directly traced by the head HB. In other words, the head HB detects two other pilot signals in addition to the pilot signal assciated with the specific track that it is principally tracking. Thus, as is clear from Figure 1, if the output levels of both the signals $E_1$ and $E_2$ from the multiplying circuit 3 are equal, then this indicates that the head HB is correctly tracing the tracks $T_2$ and $T_4$. Thus, tracking control is carried out to maintain the level of the reproduced signals $E_1$ and $E_2$ equal.

The output from the multiplying circuit 3 is supplied directly to a first band-pass filter 5 that has a frequency cut-off of 15 kHz, so that the output from the band-pass filter 5 is the signal $E_1$ having a frequency of 15 kHz. The output from the multiplying circuit 3 is also supplied directly to a second band-pass filter 6 having a cut-off frequency of 45 kHz, so that the output from the band-pass filter 6 is the signal $E_2$ having a frequency of 45 kHz. the signals $E_1$ and $E_2$ are fed to respective input terminals of a differential amplifier 7, which produces an output that corresponds to the difference in level between the signals $E_1$ and $E_2$. The output signal from the differential amplifier 7 is then used to control the transport speed of the tape in order to reduce this ouput signal to zero. In this system, however, the frequency relationship between the pilot signals from the right and left adjacent tracks periodically reverses with respect to the tracks $T_2$ and $T_4$. Accordingly, depending upon whether the head HB is tracing the track $T_2$ or $T_4$, the direction of the control signal must be reversed. That is, when the head HB ($HB_1$) traces the track $T_2$, the output of the pilot signal of frequency $f_B$ recorded directly on the track $T_2$ cannot be obtained from the multiplying circuit 3, as explained above. Nevertheless, when the head HB ($HB_2$ traces the track $T_4$, the signal $S_1$ having a frequency of

$$f_D - f_B = 30 \text{ kHz}$$

is obtained from the multiplying circuit 3. Thus, when the signal $S_1$ is detected, the direction or polarity of the control signal, as might be produced from the diferrential amplifier 7, is reversed. Conventional differential amplifiers, such as the differential amplifer 7 in Figure 2, easily produce output signals of opposite polarity, and in this example such output signals are represented by signals $S_E$ and $\overline{S}_E$ fed to respective fixed input terminals of a switching circuit 8. The output from the multiplying circuit 3 is also supplied directly to a third band-pass filter 9 having a cut-off frequency of 30 kHZ and, the output from the band-pass filter 9 is fed to an on-track detecting circuit 10. Thus, when the signal $S_1$ is present, the bandpass filter 9 will pass only the signal $S_1$ to the on-track detecting circuit 10, which will produce a control signal fed to the switching circuit 8 to switch over the output connection resulting in an output of polarity opposite that of the preceding signal, and this signal can be fed to the capstan motor to control the transport speed of the tape.

Similarly, in regard to the other rotary head $H_A$ not shown, in Figure 1, the oscillator 4 or a corresponding oscillator would provide a signal of frequency $f_A$ to the multiplying circuit 3 and, thus, in the case of the track $T_1$, signals having frequencies

$$f_B - f_A = 15 \text{ kHz and } f_D - f_A = 45 \text{ kHz}$$

would be generated from the multiplying circuit 3 as the pilot signal output from the tracks adjacent the principal track. Accordingly, the capstan motor and tape transport speed would be controlled to reduce the level difference between the pilot signals to zero. In this example, when a signal with frequency $f_C - f_A = 60$ kHz is detected, and it may be noted that this signal corresponds to the signal $S_I$ above, the direction or polarity of the control signal is reversed. Because of the physical/mechanical construction of the typical rotary heads, when tracking control is accomplished using the above-described system it is generally only necessary to provide a control system for one of the two rotary heads since the other rotary head is held in a fixed relationship thereto within close tolerances and, thus a tracking control system is only required for one head.

The above-described known system employs relatively low-frequency pilot signals and such low-frequency pilot signals are difficult to erase. When the signal is recorded in the superimposed condition on a track in which similar signals had been previously recorded, at the time the previous signals are being erased this disadvantage relating to imperfect erasing is important. Depending upon the kind of modulation signal, when the information signal to be recorded has a frequency spectrum in the low-band region, for example, a PCM signal, it is difficult to separate the pilot signals from one another. Moreover, as seen from the circuit of Figure 2, because four different pilot signal frequencies are employed, the circuit arrangements can become unduly complicated.

In the following description of some embodiments of the present invention, a rotary magnetic head assembly as represented in Figure 3 is assumed to be used. In this rotary magnetic head assembly there are two rotary heads 11A and 11B arranged with equal angular separation, that is, an angular spacing of 180°. A magnetic tape 12 is wrapped around a peripheral surface of a tape guide drum 13 over an angular range less than 180°, specifically over 90°, as shown in Figure 3. The rotary heads 11A and 11B are rotated at the rate of 30 revolutions per second (or other appropriate frame rate) in a direction indicated by an arrow 15H and the tape 12 is transported at a predetermined speed in a direction indicated by an arrow 15T, so that a series of slanted or skew, parallel tracks 14A and 14B, as shown in Figure 4, will be formed on the tape 12 by the rotary heads 11A and 11B in the so-called superimposed condition. That is, the tracking width W of the head gap is selected to be larger than the final track width. Once again, the angles of the gaps of the rotary heads 11A and 11B are selected to be different in order to take advantage of the so-called azimuth loss phenomenon.

Upon inspection of the rotary head assembly of Figure 3, it will be seen that there is a period of time, in this example a time corresponding to an angular range 90°, during which neither of the rotary heads 11A and 11B contacts the tape 12. If this non-contact period is used to perform the addition of redundant data when recording and to perform data correction when reproducing, the construction of the recording and reproducing apparatus can be simplified.

In Figure 4, each of the tracks 14A and 14B is separated into a PCM signal recording region $A_P$ and a tracking signal recording region $A_T$, shown by the cross-hatched portions in the tracks 14A and 14B. The manner in which the tracking control pilot signals are recorded in the regions $A_T$ is a feature of embodiments of the present invention and is described in detail below. It may be noted, however, that the cross-hatching lines in the regions $A_T$ of Figure 4 do not correspond to the azimuth gap angles of the respective rotary heads 11A and 11B.

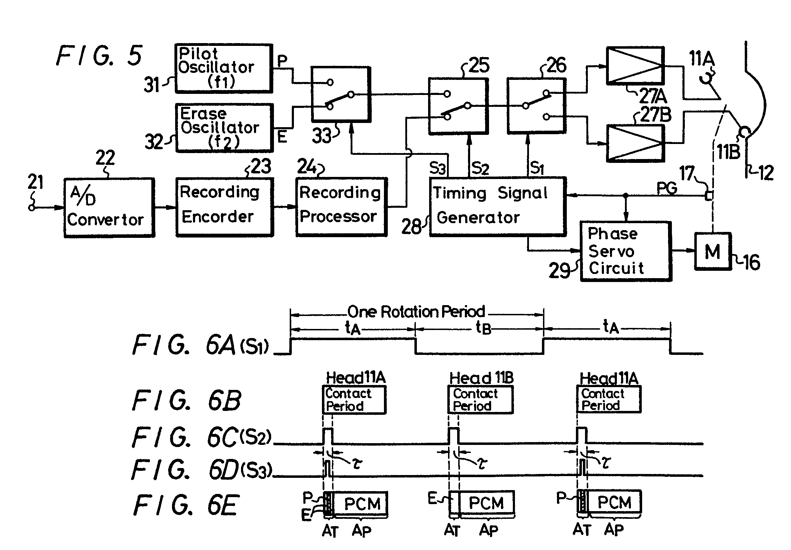

In the following, an audio signal is assumed to be PCM recorded and in Figure 5 an audio signal $S_A$ is fed in at input terminal 21 to an analog-to-digital (A/D) converter 22, where it is converted to a digiktal PCM signal, and this PCM signal is subsequently fed to a recording encoder 23. In the recording encoder 23, the sigal to be recorded in one track, which can be referred to as a one-segment signal and which may represent the digital audio signal of every period corresponding to a one-half rotation of the rotary heads 11A and 11B, is compressed in time-base by an amount slightly less than the tape contact period of the rotary heads 11A and 11B, the error correction codes are generated and added at this time, and the interleave processing and the like is carried out. The output signal from the recording encoder 23 is supplied to a recording processor 24 in which a block synchronizing signal, address data, and the like are added to each block formed of the plurality of words, and the signal is finally modulated into a signal suitable for recording and reproducing on a magnetic medium.

The PCM signal from the recording processor 24 is fed to a fixed contact of a switching circuit 25 that is used to change the recording regions between $A_P$ and $A_T$, and in one position of the switching circuit 25 the signal from the recording processor 24 is fed through the switching circuit 25 to a second switching circuit 26, which is used for head switching. The switching circuits 25 and 26 are changed over in response to respective switching signals $S_2$ and $S_1$ produced by a timing signal generating circuit 28. The timing signal generating circuit 28 is supplied with a signal indicating the rotary phase of the rotary heads 11A and 11B, as represented by a pulse signal PG of frequency 30 Hz, which indicates the phase of the rotary heads 11A and 11B and generated by pulse generator 17 in synchronism with the revolutions of a motor 16, which drives the rotary heads 11A and 11B. The pulse signal PG and a pulse signal of 30 Hz from the timing signal generating circuit 28 are both fed to a phase servo circuit 29 and, thus, the rotary phase of the motor 16 is comgrolled by a servo signal output therefrom.

As a result of this operation, the switching signals $S_1$ and $S_2$ are in synchronism with the rotation of the rotary heads 11A and 11B so that, as shown in Figure 6B, within a one-half rotation

$t_A$ of the rotary head 11A, during which the switching signal $S_2$ is at a high level, the rotary head 11A contacts the tape 12, whereas within a one-half rotation period $t_B$ during which the switching signal $S_1$ is at a low level, the rotary head 11B contacts the tape 12. Also, the switching signal $S_2$ is at a high level during a short period $\tau$ at the beginning of each head/tape contact period. Then, in response to the switching signal $S_1$, the switching circuit 26 is changed over in position, as shown in Figure 5, during the period $t_A$, and similarly, the switching circuit 26 is changed over to a position opposite that shown in Figure 5 during the period $t_B$, thereby performing signal switching between the rotary heads 11A and 11B. On the other hand, in response to the switching signal $S_2$, the switching circuit 25 is changed over to be in the position shown in Figure 5 during the period in which the switching circuit $S_2$ is at a low level, while the switching signal 25 is changed over to a position opposite to that shown in Figure 5 during the period when the switching signal $S_2$ is at a high level.

Accordingly, during periods other than the period at the beginning of the head/tape contact period for the rotary heads 11A and 11B within the period $t_A$ and $t_B$, respectively, the switching circuit 25 is changed over to the position shown in Figure 5 so that, in response to the operation of the switching circuit 26, an audio PCM signal of one segment amount from the recording processor 24 is supplied through the recording amplifer 27A to the rotary head 11A during the period $t_A$, whereas an audio PCM signal is supplied through the recording amplifier 27B to the rotary head 11B during the period $T_B$ and is thereby recorded on the PCM signal recording regions $A_P$ of the tracks 14A and 14B, respectively. This signal division in the appropriate tracks 14A and 14B is represented in Figure 6E.

During the period of time $\tau$ at the beginning of the tape/contact period of both the rotary heads 11A and 11B, the switching circuit 25 is changed over to a position opposite that shown in Figure 5, and at that time the signal from a switching circuit 33, that is, either the pilot signal or the erase signal, is fed through the switching circuit 25 to the switching circuit 26. The switching circuit 33 obtains the pilot signal P from a pilot signal oscillaor 31 having an oscillatory frequency $f_1$ and obtains the erasing signal E, to be used to erase any previous pilot signals from an erase oscillator 32 that has an oscillatory frequency $f_2$. The switching circuit 33 is selectively controlled by a switching signal $S_3$ produced by the timing signal generating circuit 28. The frequency $f_1$ of the pilot signal P is selected to be one which causes a relatively small azimuth loss, for example, within a frequency range of 100 kHz to 500 kHz, and the pilot signal P is recorded at a relatively high level.

The erase signal E is used to erase the previously recorded pilot signal because when a new recording is carried out in the superimposed condition on a tape in which an information signal was previously recorded even although the previously recorded information is being erased, the newly recorded track is not always coincident with the preceding track. The frequency $f_2$ of the erase signal E is selected to be sufficiently separated from the frequency $f_1$, and is selected to be a value which can erase the pilot signal P, and also its level is selected as one which can erase the pilot signal P.

The switching signal $S_3$, which controls the operation of the switching circuit 33, goes to a high level only within the time period $\tau$ at the beginning of the head/tape contact period of the rotary head 11A that occurs within the period $t_A$, as shown in Figure 6D. As a result, the switching circuit 33 is changed over in position to supply the pilot signal P from the pilot signal oscillator 31 only during the period in which the switching signal $S_3$ is at a high level. Thus, in this embodiment, the high-level period of the switching signal $S_3$ is selected to have a duration of approximately $\tau/3$ and is arranged at substantially the centre of the time period $\tau$. Accordingly, during the period $\tau/3$ at the centre of the period arranged within the time period $t_A$, the pilot P from the pilot signal oscillator 31 is recorded by the rotary head 11A on the centre positions of the recording region $A_T$ of every other track.

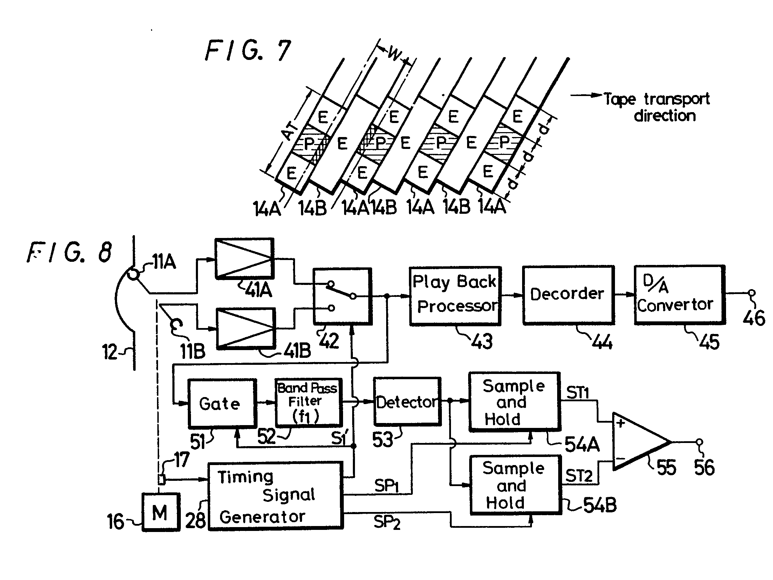

In Figure 7, the location of the pilot signal P shown by the hatched areas is at the centre of each of the recording regions $A_T$ and is bounded by the erase signals E. It may be noted also that the pilot signal P appears only on every other recorded track. During all other times, except the period $\tau/3$ at the centre of the period $\tau$ within the period $t_A$, the switching circuit 33 is changed over to be in the position shown in Figure 5, so that the erase signal E from the erase oscillator 32 is recorded by the rotary head 11A before and after the pilot signal recording positions in the recording regions $A_T$ of the tracks 14A, as represented in Figure 6E and Figure 7.

On the other hand, during the period of time that occurs within the time period $t_B$, although the switching circuit 25 is changed over in position to be connected to the switching circuit 33, the switching circuit 33 will remain in the position shown in Figure 5. Thus, during the period at the beginning of the tape/head contact period of the rotary head 11B, which occurs within the period $t_B$, the erase signal E is supplied to the rotary head 11B. This is represented in Figures 6E and 7, so that the erase signal E is recorded over the entire region $A_T$ on all successive tracks 14B.

As will be clear from Figure 7, in this embodiment the recorded positions of the pilot signals are adjusted so as not to be superimposed upon each other in relation to a direction perpendicular to the longitudinal direction of the tracks 14A and 14B. A technique similar to that described above in regard to recording pilot signals can also be applied in a video tape recorder, wherein the recording positions of the horizontal synchronising signal of the video signal are arranged in a direction perpendicular to the longitudinal direction of the track 14A or 14B. In such a case, assuming the length of the tape 12 in the longitudinal direction is given by d, which corresponds to the τ/3 period, the positions of the end portions of the track are displaced by d/2 in the longitudinal direction of the track, between adjoining tracks 14A and 14B.

Figure 8 is a schematic block diagram of a system for reproducing or playing back signals recorded in accordance with the above and, although not shown, the motor 16 is servo controlled to maintain correctly the head drum phase in the same fashion as that described in regard to the recording operation. Signals reproduced from the tape 12 by the rotary heads 11A and 11B are fed through head amplifiers 41A and 41B, respectively, to a switching circuit 42. The switching circuit 42 is controlled to be alternately changed over in position in response to a switching signal $S_1'$ having a frequency of 30 kHz and produced by the timing signal generator 28 at every half-rotational period including the tape contact periods of the rotar heads 11A and 11B. Accordingly, the output from the switching circuit 42 is an intermittent PCM signal of one segment each, as represented at Figure 6E. This PCM signal is fed to a playback processor 46 where it is demodulated back to the original PCM signal frequency, and the demodulated PCM signal is fed to a decoder 44. A decoder 44 utilizes the block synchronizing signal and other processing signals, such as the error-correction signal and the deinterleave signal, so that the data is detected in every block. This PCM signal comprising the data portion that has been decoded by the decoder 44 is fed to a digital-to-analog (D/A) converter 45, wherein it is reconverted to the analog audio signal that is fed to an output terminal 46.

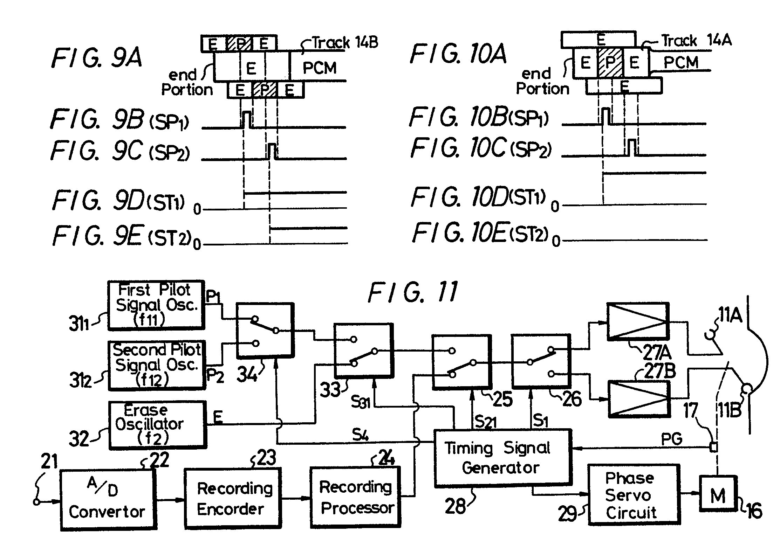

The embodiment is intended to control the tracking of the rotary heads, such as the rotary heads 11A and 11B, and this control signal originates from the switching circuit 42 and is fed to a gate circuit 51, which is controlled by the switching signal $S_1'$ produced by the timing signal generator 28, that is also fed to the switching circuit 42. The switching signal $S_1'$ controls the gate circuit 51 to derive only the signal reproduced by the rotary head 11B from the composite signal at the output of the switching circuit 42. Referring also to Figure 7, if the rotary head 11B has a gap width that traces a range width W over the track 14B and also extends into adjacent tracks 14A, the rotary head 11B will produce the pilot signals P in the region $A_T$, as represented in Figure 9A. This reproduced output signal from the rotary head 11B is fed through the gate circuit 51 to a bandpass filter 52, which has a centre frequency $f_1$ and a sufficiently narrow bandwidth to pass only the pilot signal P. A pilot signal P from the band-pass filter 52 is then fed to a detector 53, in which the presence of the pilot signal P is detected, and the output signal from the detector 53 is fed to sample-and-hold circuits 54A and 54B, respectively. Sampling pulses, as shown in Figures 9B and 9C, are generated by the timing signal generator circuit 28 and fed to sample-and-hold circuits 54A and 54B, respectively. A sampling pulse signal $SP_1$, as represented in Figure 9B, has a frequency of 30 Hz and the timing signal generating circuit 28 generates the sampling pulses at any point within the time period that corresponds to the range of distances from the position of the end portion of the track 14B that is larger than d but smaller than 3d/2. Similarly, the timing signal generating circuit 28 generates sampling pulse signal $SP_2$, the waveform of which is shown in Figure 9C, having a frequency of 30 Hz at any point within the time period that corresponds to the range of distances from the position of the end portion of hhe track 14B, which is larger than 2d but smaller than 5d/2. As represented in Figure 9A, during playback when the rotary head 11B traces the track 14B, the sampling pulse signal $SP_1$ samples the cross-talk component of the pilot signal P from the track 14A adjacent to the track 14B on the side opposite the tape transport direction, so that the sample-and-hold circuit 54A derives the tracking signal $ST_1$ advanced in phase; the tracking signal $ST_1$ is represented in Figure 9D. Similarly, the sampling pulse signal $SP_2$ samples the cross-talk component of the pilot signal P from the track 14A adjacent to the track 14B on the tape transport direction side, so that the sample-and-hold circuit 54B produced a tracking signal $ST_2$ delayed in phase; the waveform of the tracking signal $ST_2$ is shown in Figure 9E.

The tracking signals $ST_1$ and $ST_2$ produced by the sample-and-hold circuits 54A and 54B, respectively, are fed to the two respective input terminals of a differential amplifier 55, which compares the levels of these two input signals. Accordingly, the output signal from the differential amplifier 55 is the difference between the two input levels and is fed to an output terminal 56 where it is available to the capstan motor (not shown) to control the tape transport speed, so that the level difference between the outputs $ST_1$ and $ST_2$ is reduced to zero. Such zero level difference between the two tracking signals $ST_1$ and $ST_2$ means that when the rotary head 11B traces the track 14B it extends over into the two tracks 14A adjacent to the track 14B by equal amounts, that is, the tracing of the rotary head 11B is controlled so that the centre of the gap of the rotary head 11B is coincident with the centre of the track 14B being traced.

On the other hand, if the rotary head 11B is misaligned during playback and over its width W erroneously traces a path that contains mainly the track 14A, the recording region $A_T$ will appear as represented in Figure 10A. In that situation, the sampling pulse signal $SP_1$, the waveform of which is represented in Figure 10B, samples the reproduced output of the pilot signal P from the track 14A and produces the output signal $ST_1$ having a high level, as shown in Figure 10D. Because no pilot signal P is reproduced at the corresponding playback time, the sampling pulse signal $SP_2$, which controls the sample-and-hold circuit 54B, will result in a zero level signal so that the output signal from the differential amplifier 55 will be a high-level tracking signal having an advanced or leading phase. Thus, the tracing position of the rotary head 11B will be changed considerably under control of this high-level signal and will control the tape transport rate so that the rotary head 11B traces the track 14B correctly.

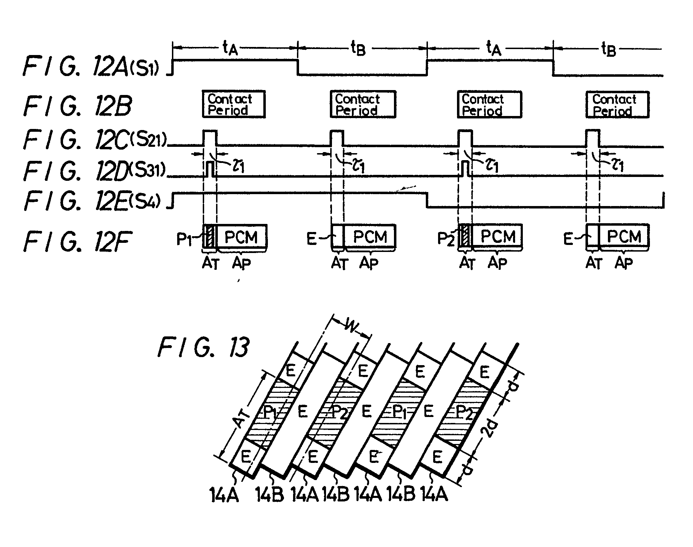

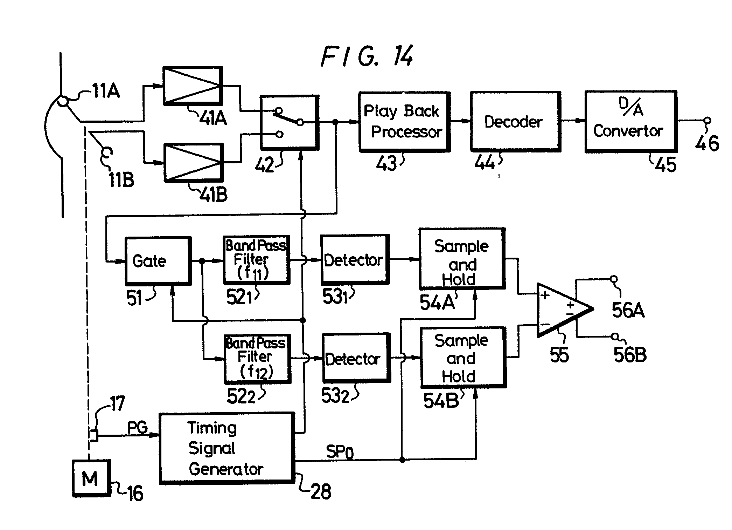

In the embodiment described above the cross-talk components of the pilot signals P reproduced from the tracks immediately adjacent to the track of interest are sampled and held at different time points under control of the sampling pulse signals $SP_1$ and $SP_2$, however, such cross-talk components can also be sampled at the same time in the following manner. Referring to Figure 11, an embodiment of a recording system is shown in which the switching circuit 25, which is the same as in the embodiment of Figure 5, is controlled by a signal $S_{21}$, the waveform of which is shown in Figure 12C, that has a pulse width represented by $\tau_1$. This pulse width $\tau_1$ corresponds to d4 and represents the duration of the period at the beginning of the tape head contact periods for the rotary heads 11A and 11B, which corresponds to the recording region $A_T$ described above, and is selected to be longer than the period $\tau$ that corresponded to a length 3d in the embodiments of Figure 5. In this embodiment, the record portion of the pilot signal P in the recording region $A_T$ of the track 14A is selected to be of duration equal to 2d, as represented in Figure 13, and the erase signal is recorded with a duration d arranged before and after the record region. Just as in the above described example, only the erase signal E is placed in the recording region $A_T$ on the track 14B. In this embodiment, pilot signals of two different frequencies are employed, specifically, a pilot signal $P_1$ has a frequency denoted by $f_{11}$ and a pilot signal $P_2$ has a frequency denoted by $f_{12}$, and during recording thereof the two pilot signals $P_1$ and $P_2$ are alternately recorded. In the embodiment shown in Figure 11, the first pilot signal $P_1$ of frequency $f_{11}$ is generated by a first pilot signal oscillator $31_1$ and is fed to one fixed contact of a switching circuit 34, and the second pilot signal $P_2$ of frequency $f_{12}$ is produced by a second pilot signal oscillator $31_2$ and fed to the other fixed contact of the switching circuit 34. The switching circuit 34 is controlled to be alternately changed over in position at each rotation of the rotary head 11A in response to a switching signal $S_4$ produced by the timing signal generating circuit 28. The waveform of the timing signal $S_4$ is shown in Figure 12E and may be derived by frequency dividing by one half the head switching signal $S_1$, which is shown in Figure 12A. The pulse width of the switching signal $S_{31}$ far from the switching circuit 33, which acts to separate the recording region $A_T$ of the track 14A into the recording regions of the pilot signal and the erase signal, is selected to correspond to 2d, which is the centre duration of the period $\tau_1$ within the period $T_A$; the signal $S_{31}$ is represented in Figure 12D. The remaining circuit elements in the embodiment of Figure 11 are identical to those of Figure 5.

Accordingly, the result of the operation of the circuit of Figure 11 is to record the pilot signals $P_1$ and $P_2$ of different frequency alternately on successive tracks 14A for a time length which is twice as long as that provided in the embodiment shown in Figure 5; and this is represented in Figure 12F. The recording region $A_T$ is shown in greater detail in Figure 13, in which it is seen that from the direction perpendicular to the longitudinal direction of the track the recording region of the pilot signal on each track is caused to overlap in time with the recording region of the adjoining pilot signal by a duration d.

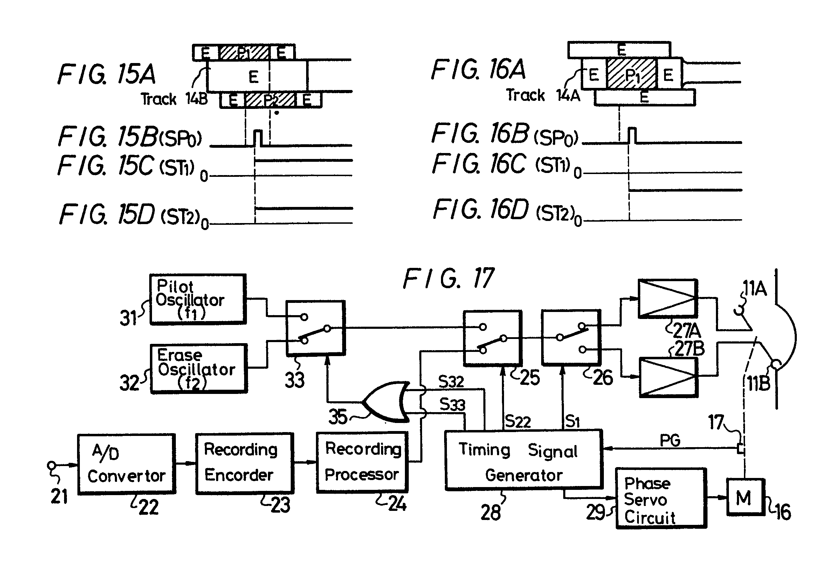

Tracking control during playback is accomplished by the circuit of Figure 14, in which the reproduced output of the rotary head 11B is again derived from the gate circuit 51 and is fed to a first band-pass filter $52_1$ having a centre frequency $f_{11}$ in the pass band, and the reproduced output signal from the rotary head 11B is also fed to a second band-pass filter $52_2$ that has a centre frequency $f_{12}$ in the pass band. It may be noted that these centre frequencies of the respective band-pass filters $52_1$ and $52_2$ are the frequencies of the first and second pilot signals $P_1$ and $P_2$ that have been alternately recorded in the tracks 14A following the embodiment of Figure 11. Thus, as represented in Figure 13, when the rotary head 11B traces a width W that contains the track 14B, as represented in Figure 15A, the pilot signals $P_1$ and $P_2$ are obtained from the respective tracks 14A adjacent to the track 14B. Asssuming proper head alignment for just tracking, the cross-talk signals of both signal $P_1$ and $P_2$ are obtained in the range from the portion separated from the end of the track 14B by 3d/2 to the portion separated from the end of track 14B by 5d/2. Accordingly, the band-pass filter $52_1$ will produce the cross-talk component of the pilot signal $P_1$, which is fed to a detector $53_1$ to determined whether such pilot signal is present. The output signal from the detector $53_1$ is fed to the corresponding sample-and-hold circuit 54A. Meanwhile, the band-pass filter $52_2$ produces cross-talk components relative to the pilot signal $P_2$ that are fed to a detector $53_2$, whose output is fed to the sample-and-hold circuit 54B. During the time period in which the pulses in the pilot signals $P_1$ and $P_2$ are co-existent, the timing signal generating circuit 28 generates a sampling pulse $SP_0$, the waveform of which is shown in Figure 15B, that is fed to both the sample-and-hold circuits 54A and 54B, respectively. Accordingly, the differential amplifier 55 once again will produce an output signal representing the level difference between the outputs $ST_1$ and $ST_2$ derived by the sample-and-hold circuits 54A and 54B, respectively, from the detected outputs of the pilots signals $P_1$ and $P_2$, respectively. The waveforms of the sample-and-hold output signals $ST_1$ and $ST_2$ are shown in Figures 15C and 15D, respectively.

In this embodiment, because the relationship between phase lead and phase lag of the two pilot signals is reversed at every track, the differential amplifier must have an additional output signal in order to develop the appropriate control signal. Thus, the differential amplifier 55 produces at an output terminal 56A, output signals having the same phase, that is, in phase, and produces at an output terminal 56B output signals having opposite phase. These output signals then are alternately switched upon each rotation of the head. In the interest of clarity and brevity the appropriate switching circuit is not shown, however, switching between the two output signals of the differential amplifier 55 could be accomplished as follows. The switching operation can be carried out by detecting whether the pilot signal output in the signal reproduced from the rotary head 11A during the half-rotation period is the pilot signal $P_1$ that appeared in the signal reproduced from the rotary head 11A during its preceding half-rotation period. The pilot signal $P_1$ contained in the signal reproduced from the rotary head 11B has an advanced phase and the pilot signal $P_2$ has a delayed phase. When the pilot signal $P_2$ appears in the signal reproduced from the rotary head 11A during the preceding half-rotation period, the above phase relationship is reversed.

In the situation where the rotary head 11B is misaligned and erroneously traces part of tracks 14B adjacent to the track 14A although tracing mainly the track 14A, the representation of the traces located near the recording region $A_T$ is shown in Figure 16A. It may be noted that only the single respective pilot signal will be detected, since no pilot signals are recorded on either side of the track 14A, and in response to the sampling pulse $SP_0$ only the pilot signal $P_1$ or $P_2$ will be reproduced from the track 14A and sampled in the respective sample-and-hold circuit and only the output signal $ST_1$, represented in Figure 16C, or the output signal $ST_2$, represented in Figure 16D, can become high, so that the tape transport rate will be changed to control the rotary head 11B in order to trace the track 14B correctly. In the representation of Figures 16C and 16D the sample-and-hold circuit 54B produces the output signal $ST_2$ and, thus, the alignment of the rotary head 11B is seen.

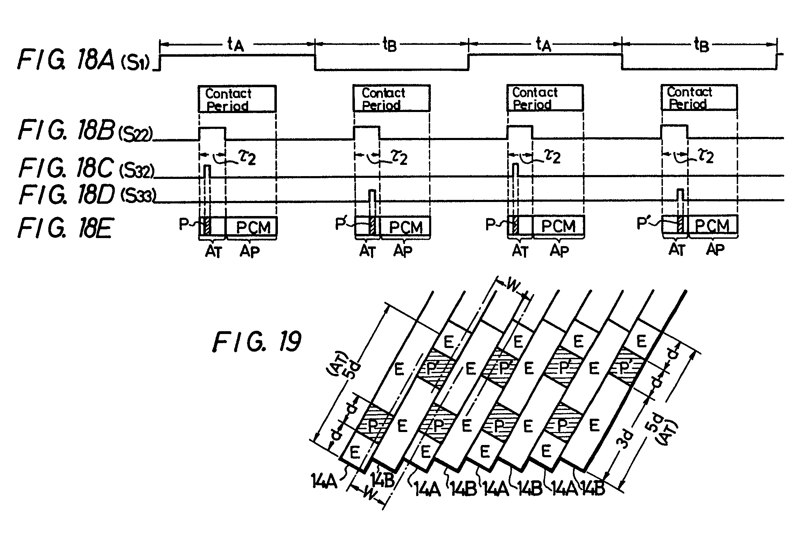

In the two embodiments of the invention that have been described above the reproduced output of either of two rotary heads 11A and 11B is used to detect and control the tracking of that particular head. The reason for this is that the two heads are fixedly mounted on the rotary drum, so that if one head traces a track under the just or aligned tracking condition then the other head must also trace its respective track under the aligned or just tracking condition. Nevertheless, to achieve the highest tracking accuracy it is advantageous to control both heads, and an embodiment of the present invention shown in Figure 17 can accomplish this. The system of Figure 17 produces recorded tracks represented in Figure 19, in which the pilot signal P of frequency $f_1$ is recorded in the track 14A at a distance between d and 2d from the end of the track. A pilot signal P', also having a frequncy $f_1$, is recorded on the track 14B but arranged at a distance between 3d and 4d from the end of the track. Thus, the length of the recording region $A_T$ for each track is selected to be 5d from the end of the track, including the region of the erase signal.

The recording system of Figure 17 is substantially the same as that of Figure 5, however, the control for the switching circuit 25, which determines the length of the recording region $A_T$, is a signal $S_{22}$ of pulse width $\tau_2$ that corresponds to the length 5d. The waveform of the switching signal $S_{22}$ is shown in Figure 18B. The signal that controls the switching circuit 33, which determines the recorded position of the pilot signal in the recording region $A_T$, is derived from the output of an OR gate 35, which has as inputs signals $S_{32}$ and $S_{33}$ produced by the timing signal generating circuit 28. The waveform of the timing signal $S_{32}$ is shown in Figure 18C, and it is seen that the signal $S_{32}$ has a high level corresponding to the range of distance from d to 2d from the end of the track 14A during the period $\tau_2$, which occurs within the period $T_A$. Similarly, the signal $S_{33}$ shown in Figure 18D has a high level corresponding to the range of distance from 3d to 4d from the end of the track 14B during the period $\tau_2$, which occurs within the period $T_B$. Thus, the signals which are supplied to the rotary heads 11a and 11B, respectively, during the tape/head contact periods are shown in Figure 18E and at the recording region $A_T$ the recorded patterns are shown in Figure 19.

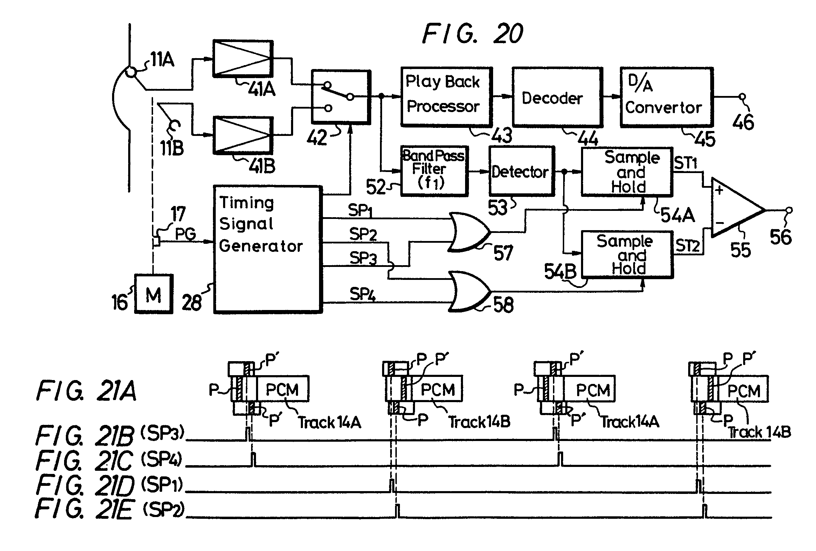

During playback, tracking control of the rotary heads is accomplished by a system shown in Figure 20, in which the reproduced output signal from the rotary head 11B is processed in the circuit of Figure 20 in the same manner as in the embodiment disclosed in Figures 5 and 17. More specifically, the sampling pulse signals $SP_1$ and $SP_2$ are fed to the respective sample-and-hold circuits 54A and 54B with the outputs thereof being compared by the differtential amplifier 55 to produce an output at the output terminala 56. In The embodiment of Figure 20, however, the sampling pulse signal $SP_1$ is fed to an OR gate 57, the output of which is fed to the sample-and-hold circuit 54A, and the sampling pulse signal $SP_2$ is fed to an OR gate 58, the output of which is fed to the sample-and-hold circuit 54B. It may be noted that the OR gates 57 and 58 would not have any effect on the overall operation of the system. Accordingly, tracking control for the rotary head 11B is carried out just as in the above-described embodiments.

In regard to the tracking control of the rotary head 11A, a sampling pulse signal $SP_3$ and a sampling pulse signal $SP_4$ are produced by the timing signal generating circuit 28 and have waveforms as shown in Figures 21B and 21C, respectively. The sampling pulse signals $SP_3$ and $SP_4$ can sample the respective crosstalk signals of the pilot signals P' from the two tracks 14B adjacent to the track 14A, and the sampling pulse signal $SP_3$ is fed to the OR gate 57, the output of which is connected to the sample-and-hold circuit 54A, and the sampling pulse signal $SP_4$ is fed to

the OR gate 58, the output of which is connected to the sample-and-hold circuit 54B. The outputs of the two sample-and-hold circuits 54A and 54B are fed to the differential amplifier 55 to generate the tracking error signal, which controls the rotary head 11A. Thus, both the rotary heads 11A and 11B can be controlled using substantially the same circuitry without requiring separate dedicated systems.

As may be seen in the above-described embodiments of the present invention, because the pilot signal to accomplish tracking control is recorded in a different region on the same track from the PCM information signal, it is relatively easy to detect the pilot signal during reproduction. Moreover, if at some later time it is desired to re-record new information in the superimposed fashion directly over previously recorded information, the region in the track for the pilot signal is different than that in which the PCM information signal is recorded and, thus, the frequency of the pilot signal can be selected to be relatively high. This permits the previously recorded pilot signal to be erased relatively easily and thereby to overcome the problems described above.

In the three embodiments of the present invention described so far, the timing signal generating circuit 28 is supplied with the pulse signal PG that indicates the rotary phases of the rotary heads 11A and 11B as determined by a pulse generator 17. Nevertheless, it is also possible to use the present invention without employing the pulse generator 17 by stopping the tape 11 and recording a predetermined signal by the rotary heads 11A and 11B, so that upon reproduction the exact point in time at which the rotary heads 11A or 11B start to contact the tape 12 can be detected, and such detected signal is used to obtain the appropriate timing. Moreover, it is pointed out that in the embodiment described in relation to Figures 17 to 21 the reproduced output timing of the pilot signal from the track being traced may also be used to provide the sampling pulse signals $SP_1$ and $SP_4$.

While the above embodiments have been described in relation to two rotary heads, the present invention can also be advantageously employed in a single head embodiment. This is possible because the track on which the pilot signal is recorded at the predetermined position and the next track on which the pilot signal are not recorded are alternately provided and, thus, one head could be used to lay down such tracks.

The present invention has been described in relation to a rotary head assembly as shown in Figure 3, however, the present invention may also be advantageously used when the tape is wound over the drum for an angular range which is substantially the same as the angular separation between the two rotary heads. Also, while the tracking signal recording region $A_T$ has been described as always being located at one end of each track, such tracking signal recording region $A_T$ can be formed at two or more places, for example, it could be at both end portions of the track or it could be arranged at the centre thereof. All that is required is that the appropriate timing signals be developed so that the location and spacing are accurately controlled.

## Claims

1. A method of recording digital signals on a magnetic record medium (12) using a rotary head (11A, 11B) that periodically traces the magnetic record medium (12), the method comprising the step of:

recording a digital information signal in a respective first predetermined area in each of a plurality of slanted tracks (14A, 14B) formed on said magnetic medium (12) by said rotary head (11A, 11B), said slanted tracks (14A, 14B) being formed by said rotary head (11A, 11B) with no guard bands between adjacent said slanted tracks (14A, 14B);

determining a respective second predetermined area in each said slanted track (14A, 14B) adjacent to one end of the respective said slanted track (14A, 14B), and different from the respective said first predetermined area; and

recording a tracking pilot signal in said second predetermined area, for tracking control during playback;

the method being characterized by:

said tracking pilot signal being recorded in every other one only of said slanted tracks (14A, 14B) in correspondingly-positioned predetermined portions of said second predetermined areas, said predetermined portions being spaced from said end of the respective said slanted track (14A, 14B) in the longitudinal direction thereof; and

applying an erase signal using said rotary head (11A, 11B) over the whole extent of every said second predetermined area except for said second portions, for erasing signals previously recorded in said second predetermined areas.

2. A method according to claim 1 wherein said step of recording a tracking pilot signal includes the step of providing said tracking pilot signal having a single frequency and recording said tracking pilot signal with no discernable phase difference between said slanted tracks (14A, 14B).

3. A method according to claim 1 wherein said step of recording a tracking pilot signal includes the step of providing said tracking pilot signal having two different frequencies, and said step of recording a pilot signal includes the step of alternating between said two different frequencies from one said second portion to the next said second portion.

4. A method according to claim 1 further comprising the steps of:

tracing a said slanted track (14A, 14B) recorded by said rotary head (11A, 11B) with a playback head (11A, 11B);

reproducing said tracking pilot signal in said second predetermined area from both said slanted tracks (14A, 14B) adjacent to said slanting track (14A, 14B) being traced;

comparing the levels of said tracking pilot signals reproduced from said adjacnet slanted tracks (14A, 14B);

generating a head tracking signal in response to said level comparison; and controlling said playback head (14A, 14B) in response to said head tracking signal.

5. Apparatus for recording digital signals in a plurality of slanted tracks (14A, 14B) on a magnetic record medium (12) by a rotary head (11A, 11B) that periodically traces said magnetic record medium (12), the apparatus comprising:

means (22 to 27) for recording a digital information signal in a respective first predetermined area in each of said plurality of slanted tracks (14A, 14B) on said magnetic medium (12) by said rotary head (11A, 11B), said slanted tracks (14A, 14B) being formed by said rotary head (11A, 11B) with no guard bands between adjacent said slanted tracks (14A, 14B);

means (26 to 28) for determining a respective second predetermined area in each said slanted track (14A, 14B) adjacent to one end of the respective said slanted track (14A, 14B), and different from the respective said first predetermined area; and

means (31, 33, 25 to 27) for recording a tracking pilot signal in said second predetermined area for tracking control during playback; characterized by:

said tracking pilot signal being recorded in every other one only of said slanted tracks (14A, 14B) in correspondingly-positioned predetermined portions of said second predetermined areas, said predetermined portions being spaced from said end of the respective said slanted track (14A, 14B) in the longitudinal direction thereof; and

means (32, 33, 25 to 27) for applying an erase signal using said rotary head (11A, 11B) over the whole extent of every said second predetermined area except for said second portions, for erasing signals previously recorded in said second predetermined areas.

6. Apparatus according to claim 5 further comprising means (31) for generating said tracking pilot signal having a single predetermined frequency and for recording said tracking pilot signal with no discernable phase difference between said slanted tracks (14A, 14B).

7. Apparatus according to 5 further comprising means $(31_1, 31_2)$ for generating said tracking pilot signals having two different frequencies and means (34) for alternately providing said two different frequency tracking pilot signals to said means (33, 25 to 27) for recording a tracking pilot signal.

8. Apparatus according to claim 5 further comprising:

playback head means (11A, 11B) for tracing a said slanted track (14A, 14B) recorded by said rotary head (11A, 11B);

means (51 to 23) connected to said playback head means (11A, 11B) for reproducing said tracking pilot signals recorded in said second predetermined areas from both said slanted tracks (14A, 14B) adjacent to said slanted track (14A, 14B) being traced;

means (54, 55) for comparing the levels of said reproduced tracking pilot signals from said adjacent slanted tracks (14A, 14B) and producing a level comparison output signal therefrom;

means (55) for generating a tracking signal in response to said level comparison output signal; and

means (16) for controlling tracking aligment of said playback head means (11A, 11B) in response to said tracking signal.

9. Apparatus according to claim 8 wherein said means (55) for generating a tracking signal includes means for alternating the polarity thereof in response to the number of said slanted track (14A, 14B) being reproduced.

## Patentansprüche

1. Verfahren zur Aufzeichung digitaler Signale auf einem magnetischen Aufzeichnungs-Medium (12) unter Benutzung eines Drehkopfes (11A, 11B), der periodisch das magnetische Aufzeichnungs-Medium (12) verfolgt, welches Verfahren einen Schritt enthält zum

—Aufzeichnen eines digitalen Informationssignals in einem betreffenden ersten vorbestimmten Bereich in jeder aus einer Vielzahl von schrägverlaufenden Spuren (14A, 14B), die auf dem magnetischen Medium (12) ausgebildet werden, durch den Drehkopf (11A, 11B), wobei die schrägverlaufenden Spuren (14A, 14B) durch den Drehkopf (11A, 11B) ohne Spiherheitsbänder zwischen benachbarten schrägverlaufenden Spuren (14A, 14B) ausgebildet werden,

—Bestimmen eines betreffenden zweiten vorbestimmten Bereichs in jeder schrägverlaufenden Spur (14A, 14B) angrenzend an ein Ende der betreffenden schrägverlaufenden Spur (14A, 14B) und unterschiedlich von dem betreffenden ersten vorbestimmten Bereich, und

—Aufzeichnen eines Spurverfolgungs-Pilotsignals in dem zweiten vorbestimmten Bereich für eine Spurverfolgungssteuerung während einer Wiedergabe,

welches Verfahren dadurch gekennzeichnet ist, daß

—das Spurverfolgungs-Pilotsignal nur in jeder zweiten der schrägverlaufenden Spuren (14A, 14B) in entsprechend positionierten vorbestimmten Abschnitten der zweiten vorbestimmten Bereiche aufgezeichnet wird, wobei die vorbestimmten Abschnitte von dem Ende der betreffenden Schrägverlaufenden Spur (14A, 14B) in Längsrichtung derselben einen Abstand aufweisen, und

—ein Löschsignal unter Benutzung des Drehkopfes (11A, 11B) über die gesamte Ausdehnung jedes der zweiten vorbestimmten Bereiche mit Ausnahme der zweiten Abschnitte zum Löschen von Signalen, die zuvor in den zweiten vorbestimmten Bereichen aufgezeichnet sind, zugeführt wird.

2. Verfahren nach Anspruch 1, bei dem der Schritt zum Aufzeichnen eines Spurverfolgungs-Pilotsignals einen Schritt enthält zum liefern eines Spurverfolgungs-Pilotsignals, das eine einzige Frequenz aufweist, und zum Aufzeichnen des Spurverfolgungs-Pilotsignals ohne erkennbare Phasendifferenz zwischen der Schrägverlaufenden Spuren (14A, 14B).

3. Verfahren nach Anspruch 1, bei dem der Schritt zum Aufzeichnen des Spurverfolgungs-Pilotsignals einen Schritt enthält zum Liefern eines Spurverfolgungs-Pilotsignals, das zwei unterschiedliche Frequenzen aufweist, und der Schritt zum Aufzeichnen eines Pilotsignals einen Schritt enthält zum Abwechseln zwischen den zwei unterschiedlichen Frequenzen von einem der zweiten Abschnitte zu dem nächsten der zweiten Abschnitte.

4. Verfahren nach Anspruch 1, das ferner Schritte umfaßt zum:

—Verfolgen einer der Schrägverlaufenden Spuren (14A, 14B), die durch den Drehkopf (11A, 11B) aufgezeichnet sind, mit einem Wiedergabekopf (11A, 11B),

—Wiedergeben des Spurverfolgungs-Pilotsignals in dem zweiten vorbestimmten Bereich von den beiden schrägverlaufenden Spuren (14A, 14B), die an die schrägverlaufende Spur (14A, 14B) angrenzt, welche verfolgt wird,

—Vergleichen der Pegel der Spurverfolgungs-Pilotsignale, die aus den angrenzenden Schrägverlaufenden Spuren (14A, 14B) wiedergegeben werden,

—Erzeugen eines Kopfspurverfolgungssignals in Reaktion auf den Pegelvergleich, und

—Steuern des Wiedergabekopfes (14A, 14B) in Reaktion auf das Kopfspurverfolgungssignal.

5. Gerät zur Aufzeichnung digitaler Signale in einer Vielzahl von schrägverlaufenden Spuren (14A, 14B) auf einem magnetischen Aufzeichnungs-Medium (12) durch einen Drehkopf (11A, 11B), der periodisch das magnetische Aufzeichnungs-Medium (12) verfolgt, welches Gerät enthält:

—Mittel (22 bis 27) zum Aufzeichnen eines digitalen Informationssignals in einem betreffenden ersten vorbestimmten Bereich in jeder der Vielzahl von schrägverlaufenden Spuren (14A, 14B) auf dem magnetischen Aufzeichnungs-Medium (12) durch den Drehkopf (11A, 11B), wobei die schrägverlaufenden Spuren (14A, 14B) durch den Drehkopf (11A, 11B) ohne Sicherheitsbänder zwischen aneinandergrenzenden schrägverlaufenden Spuren (14A, 14B) gebildet werden,

—Mittel (26 bis 28) zum Bestimmen eines betreffenden zweiten vorbestimmten Bereichs in jeder der schrägverlaufenden Spuren (14A, 14B) angrenzend an ein Ende der betreffenden schrägverlaufenden Spur (14A, 14B) und unterschiedlich von dem betreffenden ersten vorbestimmten Bereich und

—Mittel (31, 33, 25 bis 27) zum Aufzeichnen eines Spurverfolgungs-Pilotsignals in dem zweiten vorbestimmten Bereich für eine Spurverfolgungssteuerung während einer Wiedergabe,

dadurch gekennzeichnet, daß

—das Spurverfolgungs-Pilotsignal nur in jeder zweiten der schrägverlaufenden Spuren (14A, 14B) in entsprechend positionierten vorbestimmten Abschnitten der zweiten vorbestimmten Bereiche aufgezeichnet wird, wobei die vorbestimmten Abschnitte von dem Ende der betreffenden schrägverlaufenden Spur (14A, 14B) in deren Längsrichtung einen Abstand aufweisen, und

—Mittel (32, 33, 25 bis 27) zum Zuführen eines Löschsignals unter Benutzung des Drehkopfes (11A, 11B) über die gesamte Ausdehnung jedes der zweiten vorbestimmten Bereiche mit Ausnahme der zweiten Abschnitte zum Löschen von Signalen, die zuvor in den zweiten vorbestimmten Bereichen aufgezeichnet sind.

6. Gerät nach Anspruch 5, das ferner ein Mittel (31) umfaßt zum Erzeugen des Spurverfolgungs-Pilotsignals, das eine einzige vorbestimmte Frequenz hat, und zum Aufzeichnen des Spurverfolgungs-Pilotsignals ohne erkennbare Phasendifferenz zwischen den Schrägverlaufenden Spuren (14A, 14B).

7. Gerät nach Anspruch 5, das ferner umfaßt:

—Mittel $(31_1, 31_2)$ zum Erzeugen der Spurverfolgungs-Pilotsignale, die zwei unterschiedliche Frequenzen haben, und

—ein Mittel (34) zum abwechelnden Liefern der zwei Spurverfolgungs-Pilotsignale unterschiedlicher Frequenz an die Mittel (33, 25 bis 27) zum Aufzeichnen eines Spurverfolgungs-Pilotsignals.

8. Gerät nach Anspruch 5, das ferner umfaßt:

—einen Wiedergabekopf (11A, 11B) zum Verfolgen einer schrägverlaufenden Spur (14A, 14B), die durch den Drehkopf (11A, 11B) aufgezeichnet ist,

—Mittel (51 bis 53), die mit dem Wiedergabekopf (11A, 11B) zum Wiedergeben der Spurverfolgungs-Pilotsignale verbunden sind, welche in den zweiten vorbestimmten Bereichen von den beiden schrägverlaufenden Spuren (14A, 14B) aufgezeichnet sind, die an die schrägverlaufende Spur (14A, 14B), welche verfolgt wird, angrenzen,

—Mittel (54, 55) zum Vergleichen der Pegel der wiedergebenen Spurverfolgungs-Pilotsignale aus den angrenzenden Schrägverlaufenden Spuren (14A, 14B) und zum Erzeugen eines Pegelvergleichs-Ausgangssignals daraus,

—ein Mittel (55) zum Erzeugen eines Spurverfolgungssignals in Reaktion auf das Pegelvergleichs-Ausgangssignal und

—ein Mittel (16) zum Steuern der Spurverfolgungs-Ausrichtung des Widergabekopfes (11A, 11B) in Reaktion auf das Spurverfolgungs-Pilotsignal.

9. Gerät nach Anspruch 8, bei dem das Mittel (55) zum Erzeugen eines Spurverfolgungssignals Mittel enthält zum Wechseln der Polarität desselben in Reaktion auf die Nummer der schrägverlaufenden Spur (14A, 14B), die wiedergegeben wird.

## Revendications

1. Procédé d'enregistrement de signaux numériques sur un support d'enregistrement magnétique (12) à l'aide d'une tête rotative (11A, 11B) qui passe périodiquement sur le support d'enregistrement magnétique (12), le procédé comprenant les opérations suivantes:

enregistrer un signal d'information numérique sur une première aire prédéterminée respective de chacune de plusieurs pistes inclinées (14A, 14B) formées sur ledit support magnétique (12) par ladite tête rotative (11A, 11B), lesdites pistes inclinées (14A, 14B) étant formées par ladite tête rotative (11A, 11B) sans bandes de garde entre lesdites pistes inclinées (14A, 14B) adjacentes;

déterminer une deuxième aire prédéterminée respective de chaque dite piste inclinée (14A, 14B), adjacente à une première extrémité de ladite piste inclinée respective (14A, 14B) et différente de ladite première aire prédéterminée respective; et

enregistrer un signal pilote de poursuite de piste dans ladite deuxième aire prédéterminée, en vue de la commande de poursuite de piste pendant la reproduction;

le procédé étant caractérisé en ce que:

ledit signal pilote de poursuite de piste est enregistré dans une sur deux seulement desdites pistes inclinées (14A, 14B) en des parties prédéterminées dont les positions se correspondent desdites deuxièmes aires prédéterminées, lesdites parties prédéterminées étant séparées de ladite extrémité de ladite piste inclinée respective (14A, 14B) suivant sa direction longitudinale; et

on applique un signal d'effacement à l'aide de ladite tête rotative (11A, 11B) sur toute l'étendue de chaque dite deuxième aire prédéterminée à l'exception desdites deuxièmes parties, afin d'effacer les signaux préalablement enregistés sur lesdites deuxièmes aires prédéterminées.

2. Procédé selon la revendication 1, où ladite opération d'enregistrement d'un signal pilote de poursuite de piste comporte les opérations consistant à produire un dit signal pilote de poursuite de piste ayant une unique fréquence et à enregistrer ledit signal pilote de poursuite de piste sans aucun déphasage discernable entre lesdites pistes inclinées (14A, 14B).

3. Procédé selon la revendication 1, où ladite opération d'enregistrement d'un signal pilote de poursuite de piste comporte l'opération consistant à produire un dit signal pilote de poursuite de piste ayant deux fréquences différentes, et ladite opération d'enregistrement d'un signal pilote comporte l'opération consistant à faire alterner lesdites deux fréquences différentes d'une dite deuxième partie à ladite deuxième partie suivante.

4. Procédé selon la revendication 1, comprenant en outre les opérations suivantes:

suivre une dite piste inclinée (14A, 14B) enregistrée par ladite tête rotative (11A, 11B) à l'aide d'une tête de reproduction (11A, 11B);

reproduire ledit signal pilote de poursuite de piste de ladite deuxième aire prédéterminée à partir des deux dites pistes inclinées (14A, 14B) qui sont adjacentes à ladite piste inclinée (14A, 14B) qui est suivie;

comparer les niveaux desdits signaux pilote de poursuite de piste reproduits à partir desdites pistes inclinées (14A, 14B) adjacentes;

produire un signal de poursuite de piste de tête en réponse à ladite comparaison des niveaux; et

commander ladite tête de reproduction (14A, 14B) en réponse audit signal de poursuite de piste de tête.

5. Appareil permettant d'enregistrer des signaux numériques sur plusieurs pistes inclinées (14A, 14B) d'une support d'enregistrement magnétique (12) à l'aide d'une tête rotative (11A, 11B) qui passe périodiquement sur ledit support d'enregistrement magnétique (12), l'appareil comprenant:

des moyens (22 à 27) servant à enregistrer un signal d'information numérique sur une première aire prédéterminée respective de chacune desdites différentes pistes inclinées (14A, 14B) présentes sur ledit support magnétique (12) à l'aide de ladite tête rotative (11A, 11B), lesdites pistes inclinées (14A, 14B) étant formées par ladite tête rotative (11A, 11B) sans bandes de garde entre lesdites pistes inclinées (14A, 14B) adjacentes;

des moyens (26 à 28) servant à déterminer une deuxième aire prédéterminée respective de chaque dite piste inclinée (14A, 14B), adjacente à une première extrémité de ladite piste inclinée (14A, 14B) respective et différente de ladite première aire prédéterminée respective; et

des moyens (31, 33, 25 et 27) servant à enregistrer un signal pilote de poursuite de piste dans ladite deuxième aire prédéterminée, en vue de la commande de la poursuite de piste pendant la reproduction;

caractérisé par:

le fait que ledit signal pilote de poursuite de piste est enregistré dans une sur deux seulement desdites pistes inclinées (14A, 14B) en des parties prédéterminées dont les positions se correspondent desdites deuxièmes aires prédéterminées, lesdites parties prédéterminées étant séparées de ladite extrémité de ladite piste inclinée (14A, 14B) respective suivant sa direction longitudinale; et

des moyens (32, 33, 25 à 27) servant à appliquer un signal d'effacement à l'aide de ladite tête rotative (11A, 11B) sur toute l'étendue de chaque dite deuxième aire prédéterminée a l'exception desdites deuxièmes parties, afin d'effacer les signaux préalablement enregistrés sur lesdites deuxièmes aires prédéterminées.

6. Appareil selon la revendication 5, comprenant en outre un moyen (31) servant à produire un dit signal pilote de poursuite de piste ayant une unique fréquence prédéterminée et à enregister ledit signal pilote de poursuite de piste sans aucun déphasage discernable entre lesdites pistes inclinées (14A, 14B).

7. Appareil selon la revendication 5, comprenant en outre un moyen $(31_1, 31_2)$ servant à

produire des dits signaux pilote de poursuite de piste ayant deux fréquences différentes et un moyen (34) servant à fournir alternativement lesdits deux signaux pilote de pouruuite de piste de fréquences différentes auxdits moyens (33, 25 à 27) d'enregistrement d'un signal pilote de poursuite de piste.

8. Appareil selon la revendication 5, comprenant en outre:

un moyen faisant fonction de tête de reproduction (11A, 11B) servant à suivre une dit piste inclinée (14A, 14B) enregistrée par ladite tête rotative (11A, 11B);

des moyens (51, 53) connectés audit moyen faisant fonction de tête de reproduction (11A, 11B) afin de reproduire lesdits signaux pilote de poursuite de piste enregistrés sur lesdites deuxièmes aires prédéterminées à partie des deux dites pistes inclinées (14A, 14B) qui sont adjacentes à ladite piste inclinée (14A, 14B) qui est suivie;

des moyens (54, 55) servant à comparer les niveaux desdites signaux pilote de poursuite de piste reproduits venant desdites pistés inclinées adjacentes (14A, 14B) et à produire un signal de sortie de comparaison de niveau à partir de ceux-ci;

un moyen (55) servant à produire un signal de poursuite de piste en réponse audit signal de sortie de comparaison de niveau; et

un moyen (16) servant à commander l'alignement de poursuite de piste dudit moyen faisant fonction de tête de reproduction (11A, 11B) en réponse audit signal de poursuite de piste.

9. Appareil selon la revendication 8, où ledit moyen (55) servant à produire un signal de poursuite de piste comporte un moyen permettant de faire alterner sa polarité en réponse au numéro de ladite piste inclinée (14A, 14B) qui est reproduite.

FIG. 1
(PRIOR ART)

FIG. 2 (PRIOR ART)

EP 0 117 753 B1

## FIG. 3

## FIG. 4

*F I G. 5*

Pilot Oscillator (f1) — 31 — P

Erase Oscillator (f2) — 32 — E

33

21 — A/D Convertor — 22

Recording Encorder — 23

Recording Processor — 24

S3 S2 S1

25 — 26

27A 11A

27B 11B — 12

Timing Signal Generator — 28

PG — 17

Phase Servo Circuit — 29

M — 16

*F I G. 6A* (S1)

One Rotation Period

tA tB tA

*F I G. 6B*

Head 11A — Contact Period

Head 11B — Contact Period

Head 11A — Contact Period

*F I G. 6C* (S2)

*F I G. 6D* (S3)

τ τ τ

*F I G. 6E*

P / E — PCM — AT AP

E — PCM — AT AP

P — PCM — AT AP

FIG. 7

FIG. 8

FIG. 9A

E | E | E   Track 14B

end Portion   E   PCM

E | E | E

FIG. 9B (SP₁)

FIG. 9C (SP₂)

FIG. 9D (ST₁) ₀

FIG. 9E (ST₂)₀

FIG. 10A

E

end Portion   E | P | E   PCM

E

FIG. 10B (SP₁)

FIG. 10C (SP₂)

FIG. 10D (ST₁) ₀

FIG. 10E (ST₂)₀

FIG. 11

First Pilot Signal Osc. (f11)   P1

31₁

Second Pilot Signal Osc. (f12)   P2

31₂

Erase Oscillator (f2)   E

32

34

33   S3₁

S4

25   26   27A

S2₁   S1   27B

11A

17   11B

PG

21

A/D Convertor

22

Recording Encorder

23

Recording Processor

24

Timing Signal Generator

28

Phase Servo Circuit

29

M   16

EP 0 117 753 B1

$F I G. 12A$(S1)

| $t_A$ | $t_B$ | $t_A$ | $t_B$ |

$F I G. 12B$

Contact Period | Contact Period | Contact Period | Contact Period

$F I G. 12C$(S21)

$F I G. 12D$(S31)  $z_1$  $z_1$  $z_1$  $z_1$

$F I G. 12E$(S4)

$F I G. 12F$

P1 | PCM    E | PCM    P2 | PCM    E | PCM

AT  Ap    AT  Ap    AT  Ap    AT  Ap

$F I G. 13$

W

AT

E   E   E   E

P1   E   P2   E   P1   E   P2

2d

E   E   E   E

d

14A  14B 14A 14B 14A 14B 14A

# FIG. 14

EP 0 117 753 B1

FIG. 15A

Track 14B

FIG. 15B (SP0)
FIG. 15C (ST1) 0
FIG. 15D (ST2) 0

FIG. 16A

Track 14A

FIG. 16B (SP0)
FIG. 16C (ST1) 0
FIG. 16D (ST2) 0

FIG. 17

Pilot Oscillator (f1) — 31

Erase Oscillator (f2) — 32

33

35

S32
S33

S22  S1

S25  S26

27A
27B

11A

11B

17

PG

21 — A/D Convertor — 22

Recording Encorder — 23

Recording Processor — 24

Timing Signal Generator — 28

Phase Servo Circuit — 29

M — 16

FIG. 18A (S₁)

$t_A$  $t_B$  $t_A$  $t_B$

FIG. 18B (S₂₂)

Contact Period    Contact Period    Contact Period    Contact Period

FIG. 18C (S₃₂)    $\tau_2$    $\tau_2$    $\tau_2$    $\tau_2$

FIG. 18D (S₃₃)

FIG. 18E    P⌐PCM    P'⌐PCM    P⌐PCM    P'⌐PCM

AT  AP    AT  AP    AT  AP    AT  AP

FIG. 19

W

$5d$ (AT)

E  E  E  E

d  P  E  P  E  P  E  P  E

d  P  E  P  E  P  E  P  E

E  E  E  E

14A  14B  14A  14B  14A  14B  14A  14B

W

$3d$    $5d$ (AT)

EP 0 117 753 B1

FIG. 20

FIG. 21A
FIG. 21B (SP3)
FIG. 21C (SP4)
FIG. 21D (SP1)
FIG. 21E (SP2)